# EUROPEAN PATENT SPECIFICATION

(11) **EP 3 455 170 B1**
(45) Date of publication and mention of the grant of the patent: **26.01.2022**
(21) Application number: 17718104.7
(22) Date of filing: 24.04.2017
(51) Int. Cl.: C02F 1/24, B01D 19/00, B01D 19/02, B03D 1/02, B03D 1/08, B03D 1/14, B03D 1/24, C02F 101/30

(54) **DEVICE AND METHOD FOR PURIFICATION OF WASTEWATER**
VORRICHTUNG UND VERFAHREN ZUR ABWASSERREINIGUNG
DISPOSITIF ET PROCÉDÉ DE PURIFICATION DES EAUX USÉES

(30) Priority: 09.05.2016 EP 16168760
(43) Date of publication of application: 20.03.2019
(73) Proprietor: Unilever Global IP Limited, Wirral, CH62 AZD (GB); Unilever IP Holdings B.V., 3013 AL Rotterdam (NL)
(72) Inventor: ABDUL KAREEM, Shajahan, Bangalore 560 066 (IN); CHATTERJEE, Jaideep, Bangalore 560 066 (IN); GUPTA, Santosh, Kumar, Bangalore 560 066 (IN); PRATAP, Shailendra, Bangalore 560 066 (IN)
(74) Representative: Reijns, Tiemen Geert Pieter
(86) International application number: PCT/EP2017/059615
(87) International publication number: WO 2017/194294

(56) References cited:
- WO-A1-2015/052036
- US-A- 6 095 336
- US-A1- 2014 001 102

## Description

### Field of the invention

The present invention relates to a device and a method for purification of grey water on large-scale to recover foaming agents

### Background of the invention

Industries generate a lot of wastewater. The constitution of such wastewater varies according to the nature of activities of such industries. Often the wastewater contains foaming agents like surfactants.

Every industry purifies the wastewater by some means, albeit, with possibly different objectives. It could be simply to comply with environmental regulations or to recycle/reuse a portion of the water.

WO07029256 A2 (AQWISE WISE WATER TECHNOLOGIES LTD) discloses a method in which wastewater is aerated in an open tank to generate foam. The foam rises inside the open tank and gradually falls into a series of foam collectors, which are open-trough tubes called conduits. Once the accumulated foam reaches the level of the conduits, the foam overflows and falls into the conduits where it collapses at least partially, due to shear stress. The conduits carry the foam for disposal. The wastewater gets conveyed, separately, to a solid/liquid separator.

US6095336 B (Baker Hughes INC, 2000) discloses froth-floatation cells comprising a tank and an impeller rotatably disposed inside the tank for suspending solids and dispersing air in a pulp phase or slurry in the tank, thereby generating froth from the pulp phase. There are several radially oriented launders, i.e., open-trough conveyers; near the top of the tank with one end connected to an outer launder adjacent the outer periphery of the tank. A secondary launder, concentric with the outer launder, is attached to a dispersing mechanism located around the impeller. The secondary launder is in fluid communication with the radial launders, and the radial launders are likewise in fluid communication with the central launder. This provides a network of launders, which collects froth at various locations throughout the flotation cell and causes rapid removal of froth from the flotation cell. The purpose of this device is to remove froth as quickly to reduce the loss of minerals.

US2009/0178968 A1 (Cumminscorp Ltd) discloses an apparatus having plurality of elongated and vertically oriented, interconnected water treatment chambers. The chambers have inlets for a gas. Untreated water flows through the series. Foam generates at the upper surface of water in the chambers. The foam passes through the passages, to either waste or for further processing and treatment.

In the case of devices, which disclose the flow of foam through open-troughs, passages or launders, the foam is not pressurised.

GB1400064 A (Electricity Council, 1975) discloses an apparatus having an aeration tank, means for feeding liquid effluent into said aeration tank, aeration means including a pump for pumping the liquid from the aeration tank to a plurality of outlet tubes in the tank. The tubes have outlets arranged in varying angular directions and each tube has a venturi nozzle and air inlet means connected to each nozzle. Air is drawn into the liquid passing through the nozzles to aerate the liquid and produce a foam which carries solid matter. The foam overflows at the top of the aeration tank into a collection tank which contains de-foaming agent.

WO2016/150642 A1 (Unilever) discloses that if laundry wash liquor passes through an ultra-filter to remove dirt and oily soils before aerating the wastewater, it is possible to recover a substantial portion of surfactant from the collapsed foam. Disclosed therein is a device for purification of wastewater and the recovery of surfactants and purified water. The device includes an airtight container for holding the wastewater having an outlet port for discharging the foam. The container has spargers to introduce small bubbles into the wastewater to aerate it. There is a tube to convey foam to the outlet port and this port is in fluid communication with a mechanical foam-breaking device. WO2015/52036 A1 (Unilever) discloses a device for purification of grey water. The device comprises an airtight container for holding grey water, which has an outlet port for discharging the foam. The container has spargers for introducing a gas. A tube, called foam conveyor connects the outlet port to a foam-breaking device. This device has an inverted cup with the open mouth of the cup positioned in a collection tray, a disc connected to a motor to facilitate rotation of the disc, placed inside the cup and rotatably connected to base of the cup. The foam conveyor establishes fluid communication between the outlet port and the disc of the foam-breaking device. The surface of this disc is rough. The foam is substantially dry, having very low liquid content when it reaches the foam-breaking device.

US2014/00001102 A1 (Siemens) discloses a housing of a flotation device has a flotation chamber with at least one inlet for a suspension. The flotation device has at least one foam collecting unit, arranged on an upper face of the housing, for receiving and discharging a foam product, and at least one fluid distribution element, provided above the at least one inlet in the flotation chamber, for generating a flow directed toward the at least one foam collecting unit. The vertical position of the at least one fluid distribution element is variable above the at least one inlet in the flotation chamber.

We have now determined that it is possible to have significantly better separation of the wastewater into its constituents, viz., the surface-active agent and comparatively cleaner wastewater, if the amount of time spent by the foam inside the chamber (retention time) is controlled with precision.

Such a technical effect is possible by way of a device in accordance with the invention and as claimed in claim 1.

### Summary of the invention

### The device

In accordance with a first aspect of the invention is disclosed a device for purification of wastewater comprising a foaming agent, said device comprising the features disclosed in claim 1.

The device is meant for purification of wastewater comprising a foaming agent. The foaming agent could be any surfactant or any other surface-active agent.

The chamber is empty so that it can accommodate the wastewater. The chamber is airtight, except for the provision of the even numbered outlets. The volume, or in other words, the capacity, of the chamber is 10 to 100000 litres. The chamber is capable of withstanding pressure up to 1000 psig (6894757 Pa). For this reason the chamber is rigid. By rigid is meant that it is made of a material that can withstand the maximum pressure. Suitable materials of construction include metals like iron and copper, or alloys like steel, or even plastics, glass, reinforced plastics and laminates. Alternatively, the chamber could be constructed of concrete or similar building material.

It is preferred that the chamber is elongated and has circular, oval or polygonal cross section. Alternatively, but less preferably, the chamber could be of any irregular shape. The term polygonal includes triangular, rectangular, square and other shapes.

The chamber comprises an inlet for admittance of wastewater. This inlet is operatively connectable with means to stop the admittance (of wastewater) when the chamber is filled to the extent of 10 to 50 % of its capacity. This feature is necessary so that the chamber has enough empty space to contain the foam. This inlet preferably is in the form of a pipe/tube. The inlet could be located at any suitable position. However, it is preferred that the inlet is located at or above the halfway mark of the chamber, considering the total height of the chamber. There may be more than one inlets. If there were not enough space for foam, then it would affect the wetness or water content of the foam, which in turn could adversely affect the purification process.

The chamber comprises even numbered outlets for exit of foam. For example, the number of outlets could be two, four, six or even more. It is preferred that the outlets are at or near an end of the chamber, which, in use, is the designated upper end of the chamber.

The chamber comprises plurality of nozzles to introduce a gas inside under pressure of 689.5 Pa to 6894757 Pa (0.1 to 1000 psig) and flow rate of 0.1 to 10000 litres per minute. The gas is bubbled to generate foam inside the chamber. It happens due to interaction of the gas with the foaming agent present in the wastewater. Known equivalents of nozzles include spargers. It is preferred that the nozzles (or spargers) are located in such a way that in use, they always remain submerged in the wastewater. Therefore, it is preferred that the nozzles are located on the floor of the chamber. It is further preferred that the nozzles are configured to ensure that the gas bubbles are distributed uniformly across the floor of the chamber.

The gas could be introduced by means of any pressurising device such as a compressor. For this purpose, use may be made of a miniature compressor or a gas pump capable of providing gas at constant flow rate of 1 to 200 litres per minute, which allows the gas to form bubbles leading to the generation of stable foam. Preferably, the gas is admitted into the chamber by connecting the pump and the nozzles with a strong yet flexible pipe/hose of any suitable material. It is preferred that each nozzle has multiple pores, the pore size of which preferably is 1 to 1000 µm, more preferably 10 to 200 µm.

The chamber comprises plurality of tubes serving as conduits for the foam from each outlet to the at least one foam breaker. The tubes act as closed conduits, unlike the open launders of the prior art, for the foam to be carried or conveyed from the outlets to the foam breaker, or breakers, as the case may be. Therefore, the tubes may be termed as foam conveyors. There are as many numbers of tubes as there are outlets, such that each outlet has a dedicated tube. In this case the tubes are arranged in an axis symmetric manner with respect to longitudinal axis of the chamber. The tubes allow the foam to be conveyed in a radial manner outside the chamber. It is preferred that cross section of each tube is circular and its diameter is about 1 to 30 cm, more preferably 3 to 15 cm.

It is preferred that the chamber has a discharge port, close to its bottom, for discharging purified wastewater.

A foam breaker is a device which separates foam into its constituents.

The device in accordance with this invention has at least one foam-breaker comprising a vent for escape of gaseous components of the foam and means for collecting concentrated form of the foaming agent. It is preferred that each foam breaker comprises means for collecting and measuring the volume of the liquid formed by the collapsed foam.

It is preferred that the foam breaker is adjacent the upper end of the chamber. In use, this upper end is the designated top end of the chamber. The foam breaker, or breakers, could be attached, fixed on, or placed on the top of the chamber or alternatively could be placed external to the chamber. Preferably, the foam breaker is located on the top of the chamber to make the device look more compact.

It is preferred that the device in accordance with the invention comprises a single foam breaker. In this case it is further preferred that the foam breaker and the chamber are coaxial.

Alternatively, it is preferred that the device comprises one foam breaker per tube. In this case, there are as many foam breakers as there are tubes. In such cases it is further preferred that the foam breakers are arranged axis symmetrically with respect to longitudinal axis of the chamber.

A basic mechanical foam breaker has been described in Goldberg and Rubin (I & EC Process Design and Development, 1967, Vol 6) in which the shearing action of a high speed rotating disc breaks the foam.

A preferred foam breaker suitable for use in devices in accordance with this invention is disclosed in WO2015/052036 A1 (Unilever).

It is preferred that each foam breaker comprises:
(i) an inverted cup an open mouth, where said cup is positioned inside a tray meant for collecting concentrate of said foaming agent; and,
(ii) a motor-driven disc placed inside said cup which is rotatably connected to its base.

It is further preferred that the disc has rough surface. Preferred examples include indentations, corrugations and concentric grooves.

It is preferred that the disc is capable of rotating at the speed of 1000 to 10000 RPM, more preferably 2000 to 8000 RPM and further more preferably 2500 to 4000 RPM. It is further preferred that distance between that end of each tube which is in proximity to the foam breaker and the rotating disc is from 1 to 10 mm, more preferably 1 to 5 mm and most preferably 1 to 2 mm.

It is preferred that the inverted cup and the collection tray forms a single unit with air/gas vents provided in the unit to ensure that there is positive pressure in the foam breaker. This positive pressure enables the foam-breaking device to operate at (foam) flow rate of 1 to 500 litres/minute, preferably at a rate 50 to 200 litres/minute. This pressure is maintained by reducing the size of the vents. Due to the fact that the location of the port, which serves as the outlet for the concentrated form of the foaming agent from the foam breaker, is below the collection tray, the little hydrostatic pressure caused due to this arrangement tends to be augmented by the correspondingly little positive pressure within the foam breaker. This causes the surface-active agent to flow out of the outlet port.

The disc could be made of any suitable material such as metals, polymers and Teflon^{®}. It is preferred that diameter of the disc is 5 to 50 cm, more preferably 30 to 50 cm. It is preferred that the surface of the disc has elements smaller than median size of foam bubbles. It is preferred that the size of these elements is 0.01 to 3 mm, more preferably 0.1 to 2 mm. The elements, could for example, be protrusions or they could be made of a material present on the disc, e.g. sand or any other granular material. It is preferred that the surface of the disc comprises a pattern. Preferably, this pattern comprises, concentric corrugations. It is preferred that the pattern is formed of concentric arrangement of roughness on the surface of the disc.

The foam which generates inside the chamber is conveyed by the plurality of tubes, which serve as conduits for the foam from each outlet to the at least one foam breaker. It is preferred that foam flows at the rate of 1 to 500 litres/minute, more preferably 50 to 200 litres/min.

It is preferable to have an effluent pump to pump out the water, which remains inside the airtight chamber. This water could also be passed through a polishing filter to purify it further to the extent possible. This filter is preferably made of at least one of activated alumina, silica, diatomaceous earth, granular activated carbon, layered double hydroxides, powdered activated carbon, synthetic fibre/fabric media or filtration media based on polymeric fibers. It is preferred that the polishing filter is provided with an air vent and a drain valve which preferably are left open when the filter is not in use and left closed when the filter is in use. This arrangement prevents stagnation of water in the polishing filter and thereby reduces the chances of malodour inside the polishing filter.

### The method

In accordance with a second aspect is disclosed a method for purification of wastewater comprising a foaming agent, by using a device as claimed in claim 1, said method comprising the steps disclosed in claim 12.

It is preferred that the gas is at least one of air, oxygen, nitrogen, carbon dioxide or ozone. It is preferred that the flow-rate of the gas is 5 to 500 liters per minute. It is further preferred that pressure of the gas is maintained in the range of 689.5 Pa to 6894757 Pa (0.1 to 1000 psig).

It is further preferred that admittance of wastewater in to the chamber is stopped when said chamber is filled to the extent of 10 to 25 % of its volume.

### Residence Time:

Residence time is the average amount of time spent by an element of the foam inside the chamber before it exits the chamber through the tubes.

Residence time can be calculated by applying the following formula.

Residence time = Head space volume of the chamber/gas flow rate

It is preferred that the device is operated in such a way by controlling the concerned parameters that the residence time is 1 to 60 minutes, more preferably (60 seconds) 1 to 30 minutes.

The method may be carried out for as long a period as desired. This period will depend on several factors, primarily the total volume of wastewater to be purified and concentration of the surface-active agent in the wastewater.

It is particularly preferred that flowrate of the gas is increased gradually during the process. We have found that when the flowrate is so increased, it leads to better and cleaner separation of the surface-active agent from the wastewater. This further allows a user to convert the wastewater into a fraction having high surfactant content and a corresponding fraction having significantly lower surfactant content. In other words, the method in accordance with the invention provides a means to separate wastewater which contains significant amount of surface-active agent, into a concentrate of the said surface-active agent and a large quantity of treated wastewater of significantly better quality. The treated water and the concentrate are rendered fit for any suitable use. It is possible to have as high as five to ten-fold increase in the concentration of the surface-active agent. For example, it is possible to separate a sample wastewater (100 litres) containing 2000 ppm of a surfactant into a surfactant-rich first fraction (the concentrate) of about 10 litres and the balance 90 litres of significantly cleaner water (second fraction) containing very little surfactant as compared to the wastewater.

The method in accordance with the invention separates a given volume of wastewater into a first fraction rich in surface-active agent content and a second fraction comprising an amount of surface-active agent not more than 5% of the amount comprised in said first fraction. It is preferred that the first fraction is 5 to 15% of the volume of said wastewater, the balance being said second fraction. It is further preferred that concentration of surface-active agent in said first fraction is 5 to 10 times its concentration in said wastewater.

### Brief description of the figures

Fig.1 is isometric view of a device in accordance with the invention having one foam breaker.
Fig.2 is a longitudinal sectional view of another device in accordance with the invention.

In the detailed description of the figures, the number series 100 onwards is used in respect of the device.

### Detailed description of the figures

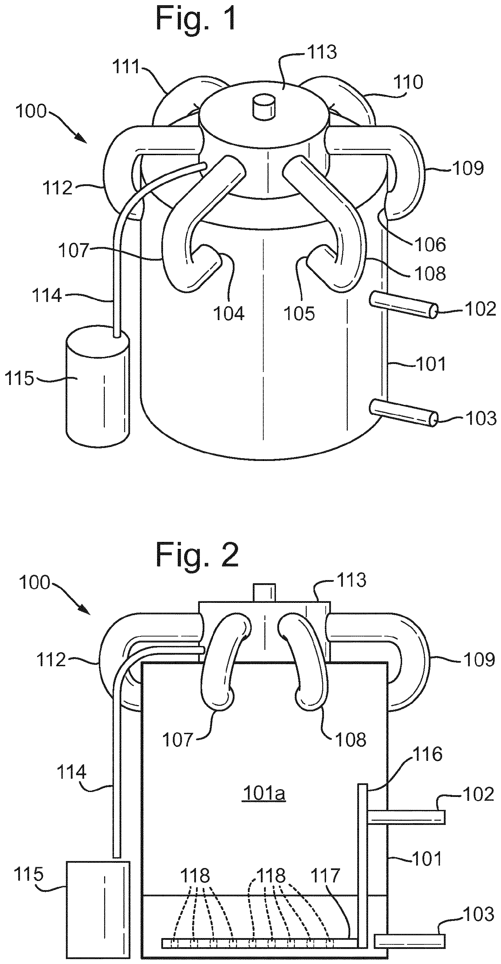

Fig.1 is isometric view of the device in accordance with the invention.

The device for purification of wastewater (100) has a cylindrical empty air-tight chamber (101) of volume 500 litres. The chamber is made of HDPE, a rigid polymeric material. It enables the chamber to withstand pressure up to 1000 psig (6894757 Pa).

The wastewater may be stored in any other container or this chamber (101) could be connected to a source of wastewater by any suitable means. An inlet (102) placed approximately at the middle of the chamber (101) allows for entry of a gas inside the chamber (101). Another inlet (103) allows for entry of wastewater inside the interior of the chamber (101) to fill it. The inlet (103) is in the form of a pipe. The inlet is operatively connected to a stopcock which serves as a means to stop the admittance of wastewater, when the chamber is filled to the extent of 10 to 50 % of its capacity. This is at the desire of the operator. The stopcock is not visible in this view.

Towards the upper end of the chamber (101) are present six outlets for foam, of which three (104, 105, 106) are in the front face of the chamber (101) and the other are in the back face. Each outlet is in fluid connection with its corresponding tube (107 to 112). In view of the fact that the outlets (104, 105, 106) are flush with one end of their corresponding tubes (107, 108, 109) the said outlets (104, 105,106) are not visible clearly. The tubes (107 to 112) serve as conduits for the foam from each outlet. The tubes (107-112) are arranged in an axis symmetric manner with respect to longitudinal axis of chamber (101).

A single foam breaker (113) is placed on top of the chamber (101), adjacent to the upper end and placed coaxial with the chamber (101). The foam breaker has a vent for escape of gaseous components of the foam (e.g., air) and means for collecting concentrated form of the foaming agent.

A tube (114) serves as a conduit for flow of the surface-active concentrate which is generated as a result of the action of the foam breaker (113). The concentrate collects inside a container (115). Alternatively, it may be collected in any other container or may be channeled to a larger receptacle.

Fig.2 is a longitudinal sectional view of another device in accordance with the invention.

Amongst other features that are visible in Fig.1 also, Fig.2 shows the internal configuration of the chamber (101). The gas inlet (102) which is in the form of a pipe and meant for entry of a gas inside the chamber (101), is connected to a tube having a vertical arm (116) and a horizontal arm (117). Spread along this horizontal arm (117) are plurality of nozzles (spargers), collectively denoted as (118). The interior hollow portion of the chamber (101) is denoted as (101a).

In use, the wastewater is made to enter the chamber (101) through the inlet (103), wherein it starts filing the interior (101a) of the chamber (101). When sufficient quantity of wastewater has accumulated inside the chamber (101), the inflow is stopped.

A gas (e.g, air) is then introduced into the wastewater under the required pressure. The gas is bubbled through the nozzles (118). This causes foaming due to presence of surface-active agent(s) in the wastewater. As there is no other exit for the foam, it starts to rise towards the top of the chamber (101) where the foam breaker (113) is situated. The foam then apportions itself to flow radially out of the chamber (101) through each outlet (104 to 106, not visible in this view). From the outlets, the foam travels through the tubes (107 to 109) and it ultimately reaches the foam breaker (113). Inside the foam breaker, the components thereof are separated from each other thereby causing the gas to escape while the concentrated surface-active agent to flow through the tube (114) into the container (115).

The invention will be explained in details with the following non-limiting examples.

### Examples

### Example 1

A cylindrical airtight chamber having internal volume of 2000 L was provided with the features disclosed hereinafter. The chamber was made of HDPE, a polymeric, rigid material. The chamber had an inlet, a port for entry of wastewater located towards the middle of the chamber. Similarly, the chamber had a port for exit of treated water at the lowest section of the chamber. The chamber contained plurality of nozzles in the form of spargers, near the floor of the chamber, which were connected to an air pump by way of flexible tubing. Valves and rotameters were used to control the air flowrate. The nozzles were capable of generating air bubbles of size lesser than 100 µm.The chamber had eight (8) circular outlets towards the upper end of the chamber. The diameter of each outlet were approximately 10.16 cm (4 inches).

The orientation of the outlets caused the foam to exit the chamber in the radial direction.

Each outlet ports was connected to a tube serving as a conduit for the foam from the outlet of the chamber to the foam breaker. The tubes were polymeric pipes and elbows.

One foam breaker was placed on top of the chamber. The foam breaker had eight entry ports for foam, each port having diameter of 7.62 cm (3 inches). The foam breaker had a rotating disc whose diameter was 340 mm and which rotated at 2700 rpm aided by a motor. The foam breaker had eight ports for exit of gaseous components of the foam and one outlet port near its bottom for letting out the concentrated form of the foaming agent.

The chamber was filled with 400 L (occupying 20% of the total capacity) of wastewater containing a commercially available shampoo formulation equivalent to SLES (an ethoxylated anionic surfactant) concentration of 1250 ppm. Pressurised air was introduced inside the chamber initially at flow rate of 40 litres/minute, which was later increased to 60 litres/minute after two hours and subsequently to 80 litres/minute after seven hours. The concentration of SLES remaining behind in the wastewater was measured periodically. The data is summarised in Table 1.

**Table 1**

| Time/hours | Air flow rate in litres/ minute | Concentration of SLES/ppm in the wastewater |
|---|---|---|
| 0.0 | 40 | 1252 |
| 2.0 | 60 | 1127 |
| 4.0 | 60 | 974 |
| 5.4 | 70 | 904 |
| 7.0 | 80 | 710 |
| 8.0 | 80 | 626 |
| 9.2 | 80 | 459 |
| 10.7 | 80 | 300 |
| 12.2 | 60 | 222 |
| 13.0 | 90 | 139 |
| 13.3 | 90 | 125 |

The data in Table 1 clearly indicates steady decline in the concentration of SLES over the period. In about fourteen hours, the concentration declined significantly by an order of magnitude from 1252 to 125 ppm. This means that the device and the method were highly effective in purifying the water.

In Table 2 is shown the gradual increase in the volume of concentrated surfactant (SLES) and the corresponding gradual decrease in the volume of the (treated) wastewater which is left behind in the closed chamber.

**Table 2**

| Time/hours | Volume of the concentrated surfactant/litres | Volume of wastewater left behind/litres |
|---|---|---|
| 0.0 | 0 | 400 |
| 1.8 | 4 | 396 |
| 2.1 | 5 | 395 |
| 7.3 | 24 | 376 |
| 8.0 | 26 | 374 |
| 8.5 | 28 | 372 |
| 8.7 | 29 | 371 |
| 9.2 | 31 | 369 |
| 9.7 | 33 | 367 |
| 10.6 | 38 | 362 |
| 11.8 | 39 | 361 |
| 12.8 | 41 | 359 |
| 13.2 | 42 | 358 |
| 13.3 | 42 | 358 |

The data in Table 2 shows how 400 litres of wastewater containing 1250 ppm SLES gets divided into two fractions; an approximately 40 litres fraction which is rich in SLES (surfactant concentrate) containing about 8000 ppm SLES, and an approximately 360 litres fraction of almost surfactant-free water, having as little as 125 ppm SLES.

The volume of the concentrate was approximately 10 % of the initial volume of the wastewater. The concentration of SLES in this concentrate was found to be about 8000 ppm, demonstrating an almost seven-fold increase in the concentration (of SLES) compared to that in the wastewater.

### Example 2

A cylindrical airtight chamber having internal volume of 500 litres was provided with the features disclosed hereinafter. The chamber was made of a polymeric, rigid material.

The chamber had an inlet, a port for entry of wastewater located towards the middle of the chamber. Similarly, the chamber had a port for exit of treated water at its lower end. The chamber contained plurality of nozzles in the form of spargers, near the floor of the chamber, which were connected to a supply of compressed air by way of flexible tubes. Valves and rotameters were used to control the air flowrate. The nozzles were capable of generating air bubbles of size lesser than 100 µm.The chamber had four (4) circular outlets towards the upper end of the chamber. The diameter of each outlet were approximately 10.16 cm (4 inches).

The orientation of the outlets caused the foam to exit the chamber in radial direction.

Each outlet ports was connected to a tube serving as conduit for the foam from the outlet to the foam breaker. The tubes were polymeric pipes.

A single foam breaker was placed on top of the chamber. The foam breaker had four entry ports for foam, each port having diameter of 7.62 cm (3 inches).

The foam breaker had a rotating disc whose diameter was 340 mm and which rotated at 2700 rpm aided by a motor. The foam breaker had eight ports for exit of gaseous components of the foam and one outlet port near its bottom for letting out the concentrated form of the foaming agent.

The chamber was filled with 100 L (occupying 20% of the total capacity) of wastewater containing a commercially available shampoo preparation equivalent to SLES (an ethoxylated anionic surfactant) concentration of 750 ppm. Pressurised air was introduced inside the chamber initially at flow rate of 20 litres/minute, which was later increased to 40 litres/minute after two hours. The concentration of SLES remaining behind in the wastewater was measured periodically. The data is summarised in Table 3.

**Table 3**

| Time/hours | Air flow rate/litres per minute | SLES concentration in the wastewater /ppm |
|---|---|---|
| 0.0 | 20 | 748 |
| 1.0 | 20 | 544 |
| 2.0 | 20 | 394 |
| 3.0 | 40 | 204 |
| 3.5 | 40 | 122 |

The data indicates that the concentration of SLES dropped significantly to 122 ppm in 3.5 hours.

In Table 4 is shown the gradual increase in the volume of the concentrated surfactant (SLES) and the corresponding gradual decrease in the volume of the (treated) wastewater which is left behind inside the chamber.

**Table 4**

| Time/hours | Volume of the concentrated surfactant/litres | Volume of wastewater left behind/litres |
|---|---|---|
| 0.0 | 0 | 100 |
| 1.2 | 3 | 97 |
| 1.9 | 5 | 95 |
| 2.2 | 6 | 94 |
| 2.4 | 7 | 93 |
| 2.6 | 8 | 92 |
| 3.4 | 11 | 89 |

The data in Table 4 shows how 100 litres of wastewater containing 750 ppm SLES gets divided into two fractions; an approximately 11 litres fraction which is rich in SLES (surfactant concentrate) containing about 4300 ppm SLES, and an approximately 89 litres fraction of almost surfactant-free water, having as little as 122 ppm SLES. The concentration of SLES in this concentrate is an almost seven-fold increase in the concentration (of SLES) compared to that in the wastewater.

## Claims

1. A device (100) for purification of wastewater comprising a foaming agent, said device comprising:
(i) an empty air-tight chamber (101) of volume 10 to 100000 litres, capable of withstanding pressure up to 6894757 Pa (1000 psig) comprising:
(a) an inlet (103) for admittance of wastewater and even numbered outlets (104 - 106) for exit of foam, where said inlet is operatively connectable with means to stop said admittance when the chamber is filled to the extent of 10 to 50 % of its capacity;
(b) a plurality of nozzles (118) inside said chamber to introduce a gas therein under a pressure of 689.5 Pa to 6894757 Pa (0.1 to 1000 psig) and a flow rate of 0.1 to 10000 litres per minute;
(ii) at least one foam-breaker (113) comprising a vent for escape of gaseous components of said foam and means for collecting a concentrated form of said foaming agent said means for collecting being a tube (114) that serves as a conduit for flow of the foaming agent which is generated as a result of the action of the foam breaker (113) and a container (115) to collect the concentrated form of said foaming agent; and,
(iii) a plurality of tubes (107 - 112) serving as conduits for the foam from each outlet which allow the foam to be conveyed in a radial manner outside the chamber to at least one foam breaker (113) wherein there are as many number of tubes as there are outlets, such that each outlet has a dedicated tube and wherein said tubes are arranged in an axis symmetric manner with respect to the longitudinal axis of the chamber (101).

2. A device as claimed in claim 1 wherein said chamber is elongated and has circular, oval or polygonal cross section.

3. A device as claimed in claim 1 or 2 wherein said outlets are located at or near an end of the chamber which, in use, is the designated upper end of said chamber.

4. A device as claimed in claim 3 wherein the said foam breaker is adjacent to the said upper end.

5. A device as claimed in any preceding claim 1 to 4 comprising one foam breaker (113).

6. A device as claimed in claim 5 wherein said foam breaker (113) is coaxial with said chamber (101).

7. A device as claimed in any preceding claim 1 to 4 comprising one foam breaker per tube.

8. A device as claimed in claim 7 wherein the breakers are arranged in axis symmetric manner with respect to longitudinal axis of said chamber.

9. A device as claimed in any preceding claim 1 to 8 wherein each foam breaker comprises:
(i) an inverted cup having an open mouth, where said cup is positioned inside a tray meant for collecting concentrate of said foaming agent; and,
(ii) a motor-driven disc placed inside said cup which is rotatably connected to its base.

10. A device as claimed in claim 9 wherein said disc has rough surface.

11. A device as claimed in claim 9 or 10 wherein said disc is capable of rotating at the speed of 1000 to 10000 RPM.

12. A method for purification of wastewater comprising a foaming agent, by using a device (100) as claimed in claim 1, said method comprising the steps of:
(i) admitting wastewater through said inlet into said empty chamber (101) and stopping said admittance by said operatively connected means, when said chamber is filled to the extent of 10 to 50 % of its capacity;
(ii) introducing a gas inside said chamber through said plurality of nozzles (118), under pressure of 689.5 Pa to 6894757 Pa (0.1 to 1000 psig) and flow rate of 0.1 to 10000 litres per minute,
(iii) allowing the foam generated therein to be conveyed out of said chamber to said at least one foam breaker (113) through said tubes (107-112); and,
(iv) collecting concentrated form of the foaming agent, wherein a tube (114) serves as a conduit for flow of the surface-active concentrate which is generated as a result of the action of the foam breaker (113) and wherein the concentrated form of the foaming agent is collected in a container (115).

13. A method as claimed in claim 12 wherein said gas is at least one of air, oxygen, nitrogen, carbon dioxide or ozone.

14. A method as claimed in claim 12 or 13 wherein flow-rate of said gas is maintained in the range of 5 to 500 litres per minute.

## Patentansprüche

1. Vorrichtung (100) zum Reinigen von Abwasser, das einen Schaumbildner enthält, wobei die Vorrichtung Folgendes umfasst:
(i) eine leere luftdichte Kammer (101) mit einem Volumen von 10 bis 100000 Litern, die einem Druck von bis zu 6894757 Pa (1000 psig) standhalten kann, die Folgendes umfasst:
(a) einen Einlass (103) für den Eintritt von Abwasser und eine geradzahlige Anzahl von Auslässen (104-106) für den Austritt von Schaum, wobei der Einlass betriebstechnisch mit Mitteln zum Stoppen des Eintritts verbunden werden kann, wenn die Kammer bis zu einem Ausmaß von 10 bis 50 % ihrer Kapazität gefüllt ist;
(b) mehrere Düsen (118) im Inneren der Kammer, um Gas unter einem Druck von 689,5 Pa bis zu 6894757 Pa (0,1 bis 1000 psig) und mit einer Durchflussmenge von 0,1 bis 10000 Liter pro Minute einzuleiten;
(ii) wenigstens einen Schaumbrecher (113), der eine Lüftungsöffnung zum Entlüften gasförmiger Komponenten des Schaums und Mittel zum Sammeln einer konzentrierten Form des Schaumbildners umfasst, wobei die Mittel zum Sammeln aus einem Rohr (114), das als Leitung für die Strömung des Schaumbildners dient, die als Ergebnis der Wirkung des Schaumbrechers (113) gebildet wird, und einem Behälter (115) zum Sammeln der konzentrierten Form des Schaumbildners bestehen; und
(iii) mehrere Rohre (107-112), die als Leitungen für den Schaum von jedem Auslass dienen, damit der Schaum radial aus der Kammer zu wenigstens einem Schaumbrecher (113) befördert werden kann, wobei es genauso viele Rohre wie Auslässe gibt, so dass jeder Auslass ein zugewiesenes Rohr hat, und wobei die Rohre in Bezug auf die Längsachse der Kammer (101) achsensymmetrisch angeordnet sind.

2. Vorrichtung nach Anspruch 1, wobei die Kammer länglich ist und einen kreisförmigen, ovalen oder polygonförmigen Querschnitt hat.

3. Vorrichtung nach Anspruch 1 oder 2, wobei sich die Auslässe an oder bei einem Ende der Kammer befinden, das im Einsatz das zugewiesene obere Ende der Kammer ist.

4. Vorrichtung nach Anspruch 3, wobei der Schaumbrecher angrenzend an das obere Ende angeordnet ist.

5. Vorrichtung nach einem der vorhergehenden Ansprüche 1 bis 4, die einen Schaumbrecher (113) umfasst.

6. Vorrichtung nach Anspruch 5, wobei der Schaumbrecher (113) koaxial mit der Kammer (101) ist.

7. Vorrichtung nach einem der vorhergehenden Ansprüche 1 bis 4, die einen Schaumbrecher pro Rohr umfasst.

8. Vorrichtung nach Anspruch 7, wobei die Brecher in Bezug auf die Längsachse der Kammer achsensymmetrisch angeordnet sind.

9. Vorrichtung nach einem der vorhergehenden Ansprüche 1 bis 8, wobei jeder Schaumbrecher Folgendes umfasst:
(i) einen umgekehrten Becher, der eine offene Öffnung hat, wobei der Becher in einem Einsatz positioniert ist, der zum Sammeln des Konzentrats des Schaumbildners vorgesehen ist; und
(ii) eine motorgetriebene Scheibe, die im Becher angeordnet ist, die mit der Basis drehbar verbunden ist.

10. Vorrichtung nach Anspruch 9, wobei die Scheibe eine raue Oberfläche hat.

11. Vorrichtung nach Anspruch 9 oder 10, wobei sich die Scheibe mit einer Drehzahl von 1000 bis 10000 min⁻¹ drehen kann.

12. Verfahren zum Reinigen von Abwasser, das einen Schaumbildner enthält, unter Verwendung einer Vorrichtung (100) nach Anspruch 1, wobei das Verfahren die folgenden Schritte umfasst:
(i) Hereinlassen von Abwasser durch den Einlass in die leere Kammer (101) und Stoppen des Hereinlassens durch betriebstechnisch verbundene Mittel, wenn die Kammer bis zu einem Ausmaß von 10 bis 50 % ihrer Kapazität gefüllt ist;
(ii) Einleiten eines Gases in die Kammer durch mehrere Düsen (118) unter einem Druck von 689,5 Pa bis zu 6894757 Pa (0,1 bis 1000 psig) und mit einer Durchflussmenge von 0,1 bis 10000 Liter pro Minute,
(iii) Zulassen, dass Schaum, der darin erzeugt wird, durch die Rohre (107-112) aus der Kammer zu wenigstens einem Schaumbrecher (113) geleitet wird; und
(iv) Sammeln der konzentrierten Form des Schaumbildners, wobei ein Rohr (114) als Leitung für die Strömung des oberflächenaktiven Konzentrats dient, die als Ergebnis der Wirkung des Schaumbrechers (113) erzeugt wird, und wobei die konzentrierte Form des Schaumbildners in einem Behälter (115) gesammelt wird.

13. Verfahren nach Anspruch 12, wobei das Gas Luft, Sauerstoff, Stickstoff, Kohlenstoffdioxid und/oder Ozon ist.

14. Verfahren nach Anspruch 12 oder 13, wobei die Durchflussmenge des Gases im Bereich von 5 bis 500 Liter pro Minute gehalten wird.

## Revendications

1. Dispositif (100) pour purification d'eaux usées comprenant un agent moussant, ledit dispositif comprenant :
(i) une chambre vide étanche à l'air (101) de volume 10 à 100 000 litres, capable de résister à une pression jusqu'à 6 894 757 Pa (1 000 psig) comprenant :
(a) une entrée (103) pour admission d'eaux usées et des sorties en nombre pair (104-106) pour sortie de mousse, où ladite entrée peut être connectée en fonctionnement avec un moyen pour arrêter ladite admission lorsque la chambre est remplie dans la mesure de 10 à 50 % de sa capacité ;
(b) plusieurs buses (118) à l'intérieur de ladite chambre pour introduire un gaz dans celle-ci sous une pression de 689,5 Pa à 6 894 757 Pa (0,1 à 1 000 psig) et un débit de 0,1 à 10 000 litres par minute ;
(ii) au moins un briseur de mousse (113) comprenant un évent pour échappement de constituants gazeux de ladite mousse et un moyen pour recueillir une forme concentrée dudit agent moussant ledit moyen pour recueillir étant un tube (114) qui sert comme un conduit pour l'écoulement de l'agent moussant qui est produit comme un résultat de l'action du briseur de mousse (113) et un récipient (115) pour recueillir la forme concentrée dudit agent moussant ; et,
(iii) plusieurs tubes (107-112) servant comme conduits pour la mousse à partir de chaque sortie qui permet à la mousse d'être acheminée de manière radiale à l'extérieur de la chambre jusqu'à au moins un briseur de mousse (113) dans lequel il y a autant de tubes qu'il y a de sorties, de sorte que chaque sortie possède un tube dédié et dans lequel lesdits tubes sont disposés dans une manière symétrique en axe par rapport à l'axe longitudinal de la chambre (101).

2. Dispositif selon la revendication 1, dans lequel ladite chambre est allongée et présente une section transversale circulaire, ovale ou polygonale.

3. Dispositif selon la revendication 1 ou 2, dans laquelle lesdites sorties sont disposées à ou à proximité d'une extrémité de la chambre qui, lors de l'utilisation, est l'extrémité supérieure désignée de ladite chambre.

4. Dispositif selon la revendication 3, dans lequel ledit briseur de mousse est adjacent à ladite extrémité supérieure.

5. Dispositif selon l'une quelconque des revendications 1 à 4 précédentes comprenant un briseur de mousse (113).

6. Dispositif selon la revendication 5, dans lequel ledit briseur de mousse (113) est coaxial avec ladite chambre (101).

7. Dispositif selon l'une quelconque des revendications 1 à 4 précédentes comprenant un briseur de mousse par tube.

8. Dispositif selon la revendication 7, dans lequel les briseurs sont disposés de manière asymétrique en axe par rapport à l'axe longitudinal de ladite chambre.

9. Dispositif selon l'une quelconque des revendications 1 à 8 précédentes, dans lequel chaque briseur de mousse comprend :
(i) un bol inversé ayant une embouchure ouverte, où ledit bol est positionné à l'intérieur d'un moyen de plateau pour recueillir du concentré dudit agent moussant ; et,
(ii) un disque motorisé placé à l'intérieur dudit bol qui est connecté à sa base en pouvant tourner.

10. Dispositif selon la revendication 9, dans lequel ledit disque présente une surface rugueuse.

11. Dispositif selon la revendication 9 ou 10, dans lequel ledit disque est capable de tourner à la vitesse de 1 000 à 10 000 tr/min.

12. Procédé pour purification d'eaux usées comprenant un agent moussant, en utilisant un dispositif (100) selon la revendication 1, ledit procédé comprenant les étapes de :
(i) admission d'eaux usées par ladite entrée dans ladite chambre vide (101) et arrêt de ladite admission par ledit moyen connecté en fonctionnement, lorsque ladite chambre est remplie dans la mesure de 10 à 50 % de sa capacité ;
(ii) introduction d'un gaz à l'intérieur de ladite chambre par lesdites plusieurs buses (118), sous une pression de 689,5 Pa à 6 894 757 Pa (0,1 à 1 000 psig) et un débit de 0,1 à 10 000 litres par minute,
(iii) laisser la mousse produite dans celle-ci être transportée à l'extérieur de ladite chambre jusqu'audit au moins un briseur de mousse (113) par lesdits tubes (107-112) ; et,
(iv) recueil de forme concentrée de l'agent moussant, où un tube (114) sert comme un conduit pour l'écoulement du concentré actif en surface qui est généré comme un résultat de l'action du briseur de mousse (113) et dans lequel la forme concentrée de l'agent moussant est recueillie dans un récipient (115).

13. Procédé selon la revendication 12, dans lequel ledit gaz est au moins un parmi l'air, l'oxygène, l'azote, le dioxyde de carbone ou l'ozone.

14. Procédé selon la revendication 12 ou 13, dans lequel le débit dudit gaz est maintenu dans l'intervalle de 5 à 500 litres par minute.
